# EUROPÄISCHE PATENTSCHRIFT

(11) **EP 4 068 018 B1**
(45) Veröffentlichungstag und Bekanntmachung des Hinweises auf die Patenterteilung: **03.04.2024**
(21) Anmeldenummer: 22157780.2
(22) Anmeldetag: 21.02.2022
(51) Int. Cl.: G05B 19/4065, G05B 13/02, G05B 23/02

(54) **VORRICHTUNG UND VERFAHREN ZUR ÜBERWACHUNG EINES STANZPROZESSES**
DEVICE AND METHOD FOR MONITORING A STAMPING PROCESS
DISPOSITIF ET PROCÉDÉ DE SURVEILLANCE D'UN PROCESSUS DE POINÇONNAGE

(30) Priorität: 01.04.2021 DE 102021108312
(43) Veröffentlichungstag der Anmeldung: 05.10.2022
(73) Patentinhaber: Lisa Dräxlmaier GmbH, 84137 Vilsbiburg (DE)
(72) Erfinder: Hinterbrandner, Florian, 83471 Schönau am Königsee (DE); GIRSCHICK, Tobias, 84036 Landshut (DE)

(56) Entgegenhaltungen:
- US-A1- 2018 272 491
- US-B2- 10 139 311
- UBHAYARATNE INDIVARIE ET AL: "An audio signal based model for condition monitoring of sheet metal stamping process", 2015 IEEE 10TH CONFERENCE ON INDUSTRIAL ELECTRONICS AND APPLICATIONS (ICIEA), IEEE, 15. Juni 2015 (2015-06-15), Seiten 1267-1272, XP032816062, DOI: 10.1109/ICIEA.2015.7334303 [gefunden am 2015-11-20]
- ZHANG GUICAI ET AL: "Punching process monitoring using wavelet transform based feature extraction and semi-supervised clustering", PROCEDIA MANUFACTURING, Bd. 26, 1. Januar 2018 (2018-01-01), Seiten 1204-1212, XP055945591, 43rd North American Manufacturing Research Conference, NAMRC 43, 8-12 June 2015, UNC Charlotte, North Carolina, United States ISSN: 2351-9789, DOI: 10.1016/j.promfg.2018.07.156
- SARI DELIMA YANTI ET AL: "Preliminary study for online monitoring during the punching process", THE INTERNATIONAL JOURNAL OF ADVANCED MANUFACTURING TECHNOLOGY, SPRINGER, LONDON, Bd. 88, Nr. 5, 30. Mai 2016 (2016-05-30), Seiten 2275-2285, XP036143639, ISSN: 0268-3768, DOI: 10.1007/S00170-016-8956-Y [gefunden am 2016-05-30]
- MARDAPITTAS A S ET AL: "Expert system for tool wear monitoring in blanking", 19920101, 1. Januar 1992 (1992-01-01), Seiten 2/1-2/4, XP006522217,
- ZHOU JING-TAO ET AL: "Tool remaining useful life prediction method based on LSTM under variable working conditions", THE INTERNATIONAL JOURNAL OF ADVANCED MANUFACTURING TECHNOLOGY, SPRINGER, LONDON, Bd. 104, Nr. 9-12, 31. August 2019 (2019-08-31), Seiten 4715-4726, XP036922770, ISSN: 0268-3768, DOI: 10.1007/S00170-019-04349-Y [gefunden am 2019-08-31]
- AN QINGLONG ET AL: "A data-driven model for milling tool remaining useful life prediction with convolutional and stacked LSTM network", MEASUREMENT, INSTITUTE OF MEASUREMENT AND CONTROL. LONDON, GB, Bd. 154, 31. Dezember 2019 (2019-12-31), XP086066721, ISSN: 0263-2241, DOI: 10.1016/J.MEASUREMENT.2019.107461 [gefunden am 2019-12-31]
- BENKEDJOUH T. ET AL: "Health assessment and life prediction of cutting tools based on support vector regression", JOURNAL OF INTELLIGENT MANUFACTURING, Bd. 26, Nr. 2, 19. April 2013 (2013-04-19) , Seiten 213-223, XP055945083, New York ISSN: 0956-5515, DOI: 10.1007/s10845-013-0774-6 Gefunden im Internet: URL:http://link.springer.com/article/10.10 07/s10845-013-0774-6/fulltext.html> [gefunden am 2022-07-22]
- WONG SHI YUEN ET AL: "Technical data-driven tool condition monitoring challenges for CNC milling: a review", THE INTERNATIONAL JOURNAL OF ADVANCED MANUFACTURING TECHNOLOGY, SPRINGER, LONDON, Bd. 107, Nr. 11-12, 1. April 2020 (2020-04-01), Seiten 4837-4857, XP037134471, ISSN: 0268-3768, DOI: 10.1007/S00170-020-05303-Z [gefunden am 2020-05-07]

## Beschreibung

### Technisches Gebiet

Die Erfindung betrifft eine Vorrichtung und ein Verfahren zur Überwachung eines Stanzprozesses, insbesondere zur prädiktiven Überwachung eines Stanzprozesses.

### Stand der Technik

Bislang wird für Stanzprozesse überwiegend eine präventive Wartungsstrategie verfolgt. Auf Expertenschätzungen basierend, werden statische Wartungsintervalle für jedes einzelne Stanzwerkzeug festgelegt. Unvorhersehbare Ereignisse wie beispielsweise das Abreißen des Schmierfilms, Bedienfehler, hochkommende Butzen usw. können bei dieser Betrachtung jedoch nicht berücksichtigt werden. So kann es vorkommen, dass noch innerhalb des Wartungsintervalls die Verschleißgrenze erreicht wird und somit die Produktqualität leidet. Im schlimmsten Falle kann es zur Beschädigung des Werkzeuges kommen. Dies ist mit erheblichen Kosten verbunden, da ungeplante Maschinenstillstände und Reparaturkosten entstehen. Des Weiteren binden die zur Behebung des Schadens notwendigen Maßnahmen sowohl Personal- und als auch Maschinenkapazitäten.

Die Druckschrift "UBHAYARATNE INDIVARIE ET AL: "An audio signal based model for condition monitoring of sheet metal stamping process", 2015 IEEE 10TH CONFERENCE ON INDUSTRIAL ELECTRONICS AND APPLICATIONS (ICIEA), 2015, pp. 1267-1272, doi: 10.1109/ICIEA.2015.7334303, XP032816062" betrifft ein Modell der Blindsignaltrennung (BSS) für das Stanzen von Blechen mit einem mechanischen Presssystem. Es werden eine Reihe von speziell entwickelten Maschinenoperationen durchgeführt und eine neue Signalextraktionstechnik entwickelt.

Die Druckschrift "G. Zhang, C. Li, H. Zhou and T. Wagner, Punching process monitoring using wavelet transform based feature extraction and semi-supervised clustering, Procedia Manufacturing, Bd. 26, 2018, Seiten 1204-1212, ISSN 2351-9789, https://doi.Org/10.1016/j.promfg.2018.07.156. XP055945591" betrifft Verfahren zur Überwachung eines Stanzprozesses. Zur Messung der Dehnung wird ein piezoelektrischer Dehnungssensor verwendet, um eine Dehnung auf der Presssäulenoberfläche zu bestimmen. Diese Dehnung wird als Prozessvariable zur Überwachung des Stanzvorgangs eingesetzt.

Die Druckschrift "D.Y. Sari, TL. Wu, and BT. Lin, Preliminary study for online monitoring during the punching process, The International Journal of Advanced Manufacturing Technology, 30. Mai 2016, Bd. 88, Nr. 5, Seiten 2275-2285 (2017), https://doi.org/10.1007/s00170-016-8956-y, XP036143639" betrifft Verfahren zur Überwachung eines Stanzprozesses. Zur Überwachung des Stanzprozesses werden vibrations-basierte Überwachungsverfahren eingesetzt.

Die Druckschrift "A. S. Mardapittas and Y. H. J. Au, Expert System for tool wear monitoring in blanking, IEE Colloquium on Intelligent Fault Diagnosis - Part 1; Classification-Based Techniques, 1992, Seiten 2/1 -2/4, XP006522217" betrifft Verfahren zur Überwachung eines Stanzprozesses. Zur Überwachung des Stanzprozesses werden die folgenden fünf Messsignale verwendet: Die Verschiebung des Stempels, optische Signale zur Überwachung von Schneckenrückläufen und Werkzeugbruch, die Kraft, die der Stempel erfährt, die Schallemission und die Beschleunigung des Stempels.

Die Druckschrift US 10 139 311 B2, betrifft ein Verfahren und ein System zur Erkennung von Werkzeugmaschinenverschleiß oder Anomalien, Vorhersage der Maschinen-Werkzeugrestnutzungsdauer und Planung in der Fertigung. Ein Werkzeugverschleiß oder eine Verschlechterung kann über Charakterisieren eines Trends einer Änderung eines Parameters aus dem einen oder den mehreren Clustern von Bearbeitungsprozessen, die von der Werkzeugmaschine durchgeführt werden, erfasst werden. Die verbleibende Nutzungsdauer der Werkzeugmaschine kann durch Extrapolieren des Trends nach einem Markov-Prozess erster Ordnung und Anpassung eines Partikelfilters prognostiziert werden. Die Ergebnisse der Erkennung können für die Entscheidungsfindung in der Fertigungshalle verwendet werden.

Die Druckschrift US 2018/272491 A1, betrifft ein Verfahren zur Überwachung und Vorhersage des Werkzeugverschleißes, die ein hybrides dynamischen neuronale Netzwerk (HDNN) nutzt, um ein Verschleiß-Vorhersageverfahren zu erstellen. Das Verschleiß-Vorhersageverfahren übernimmt tatsächliche Bearbeitungsverläufe, Sensordaten welche an dem momentanen Werkzeuglauf erfasst wurden und den vorhergesagten Verschleiß aus einem vorhergehenden Verlauf, um einen Verschleißwert des Werkzeugs vorherzusagen.

Die Druckschrift "JT. Zhou, X. Zhao, X and J. Gao, Tool remaining useful life prediction method based on LSTM under variable working conditions, The International Journal of Advanced Manufacturing Technology, Bd. 104, Seiten 4715-4726 (2019). https://doi.org/10.1007/s00170-019-04349-y, XP036922770" betrifft ein Verfahren zur Vorhersage der verbleibenden Nutzungsdauer von Werkzeugen unter variablen Arbeitsbedingungen basierend auf einem LSTM-Netzwerk. Zunächst wird eine einheitliche Darstellung von Arbeitsbedingungen entsprechend der den Werkzeugverschleiß beeinflussenden Faktoren erstellt. Dann werden die Verschleißmerkmale aus dem Prozessüberwachungssignal extrahiert. Die extrahierten Verschleißeigenschaften und andere Arbeitsbedingungen sind in einer Matrix eingebaut, um die komplexen raumzeitlichen Beziehungen unter variablen Arbeitsbedingungen zu erfassen. Mittels des LSTM-Modells wird dann das Vorhersagemodell der verbleibenden nutzbaren Lebenszeit unter variablen Arbeitsbedingungen erstellt.

Die Druckschrift "Q. An, Z. Tao, X. Xu, M. El Mansori and M. Chen, A data-driven mode! for milling tool remaining useful life prediction with convolutional and stacked LSTM network, Measurement, Bd. 154, 2020, 107461, ISSN 0263-2241, https://doi.0rg/10.1016/j.measurement.2019.107461, XP086066721" betrifft ein hybrides Modell, das ein faltungsbasiertes neuronales Netzwerk (CNN) mit einem (stacked bidirectional and uni-directional LSTM, SBULSTM)-Netzwerk kombiniert, um eine verbleibende nutzbare Lebensdauer (RUL) in einem Fräsprozess zu bestimmen.

Die Druckschrift "T. Benkedjouh, K. Medjaher, N. Zerhouni and S. Rechak, Health assessment and life prediction of cutting tools based on support vector regression, Journal of Intelligent Manufacturing, Bd. 26, Seiten 213-223 (2015). https://doi.Org/10.1007/s10845-013-0774-6, XP055945083" betrifft ein Verfahren zur Gesundheitsbewertung und Lebensdauervorhersage von Schneidwerkzeugen basierend auf einer Support-Vektor-Regression. Ziel ist es hierbei, den Abnutzungsgrad des Schneidwerkzeugs zu schätzen und vorherzusagen und die verbleibende Nutzungsdauer (RUL) des Schneidwerkzeugs zu bestimmen. Es wird eine Methode zur Werkzeugzustandsbestimmung und Lebensdauervorhersage vorgestellt, die auf nichtlinearer Merkmalsreduktion und Stützvektorregression basiert.

Die Druckschrift "S.Y. Wong, J.H. Chuah and J.Y. Yap, Technical data-driven tool condition monitoring challenges for CNC milling: a review, The International Journal of Advanced Manufacturing Technology Bd. 107, Seiten 4837-4857, (2020). https://doi.Org/10.1007/s00170-020-05303-z, XP037134471" betrifft einen Aufsatz zur datengesteuerten Werkzeugzustandsüberwachung beim CNC Prozess. Der Aufsatz diskutiert die technischen Aspekte der jüngsten Entwicklungen in modernsten TCM (Tool Condition Monitoring)-Techniken und die aktuellen Herausforderungen, die die Lebensfähigkeit der TCM in realen industriellen Anwendungen einschränken.

### Beschreibung der Erfindung

Es ist eine Aufgabe der Erfindung, ein Konzept für eine verbesserte Überwachung eines Stanzprozesses zu schaffen, bei dem die oben beschriebenen Nachteile nicht auftreten.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Die Erfindung basiert auf der Idee, mehrere Verfahren in einer zielführenden Art zu kombinieren. Dies sind: 1. Erkennen und Klassifizieren von Anomalien bzw. Fehlertypen mithilfe von Künstlicher Intelligenz; 2. Zustandsbestimmung mithilfe von Künstlicher Intelligenz; und 3. Bestimmung des zukünftigen Verlaufs des Zustands des Werkzeugs.

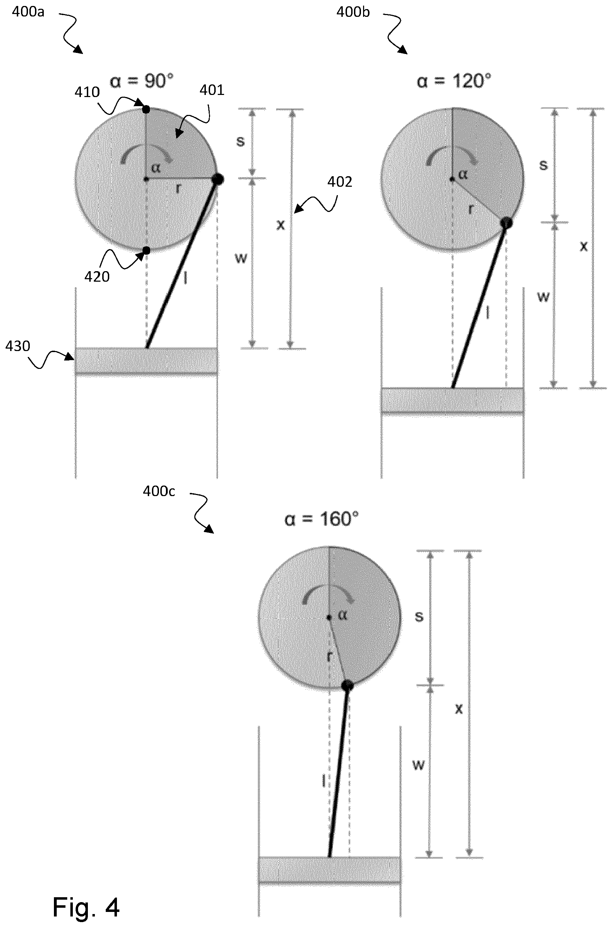

Mithilfe geeigneter Sensorik werden die für die Umsetzung relevanten Zustandsgrößen erfasst. Bei den Zustandsgrößen kann es sich beispielsweise um den Körperschall des Stanzwerkzeugs, die Temperatur des Stanzwerkzeugs und die Winkelinformation bzw. Weginformation handeln, beispielsweise die Winkelinformation des Exzenters der Exzenterpresse wie z.B. unten zu Figur 4 näher beschrieben, oder die Weginformation bei Hydraulikpressen. Zum Erfassen des Körperschalls können mehrere Piezosensoren in das Stanzwerkzeug platziert werden. In unmittelbarer Nähe befinden sich die Temperatursensoren. Der Winkel kann mithilfe eines Drehgebers aufgezeichnet werden, wie unten zu Figur 4 näher beschrieben. Nach der Datenerhebung werden mögliche Störeinflüsse kompensiert und der Datensatz aufbereitet, sodass dieser nur relevante Informationen enthält. Eine automatische Erkennung von Anomalien wird verwendet, um Abweichungen vom Normalbetrieb zu identifizieren. Sobald eine Anomalie erkannt wird, kennzeichnet ein vorab trainiertes Klassifizierungsmodell den Fehler. Ein weiteres KI-Modell dient zur Schätzung des aktuellen Werkzeugzustands. Hierfür werden lediglich jene Daten herangezogen, die vom Anomalie Detektor als normal deklariert wurden. Mittels eines zusätzlichen Algorithmus wird der zukünftige Verlauf des Zustands gemittelt.

Gemäß einem ersten Aspekt der Erfindung wird die Aufgabe gelöst durch eine Vorrichtung zur Überwachung eines Stanzprozesses gemäß Anspruch 1.

Bei dem Stanzprozess wird das Stanzwerkzeug von einer Ausgangsstellung in eine Endstellung bewegt, welche wieder der Ausgangsstellung entspricht, da es sich um einen periodischen Prozess handelt. Ausgangsstellung, Endstellung und verschiedene Zwischenstellungen sind am Beispiel einer Exzenterpresse in Figur 4 näher dargestellt.

Die Kraft, die bei dem Bewegen des Stanzwerkzeugs von der Ausgangsstellung in die Endstellung durch das Stanzwerkzeug auf den Werkstoff ausgeübt wird, wird nicht direkt sondern indirekt gemessen. Es wird das Körperschallsignal über die Piezosensoren erfasst, welches Aufschluss über die Kraft gibt und im Folgenden als Pseudo-Kraft bezeichnet wird.

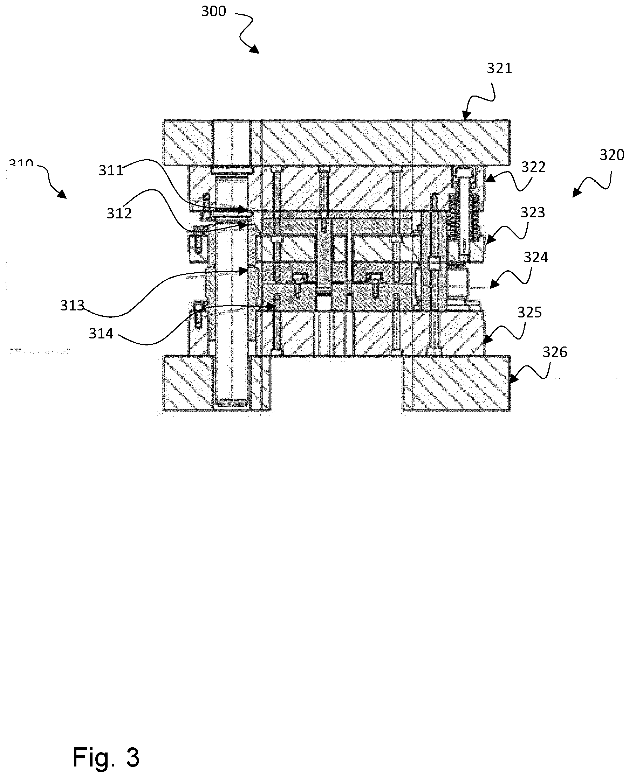

Eine Kombination aus den ersten und zweiten Daten gibt einen Hinweis auf die mechanische Arbeit, die in Form von Schwingungen und elastischen Verformungen an der jeweiligen Platte des Stanzwerkzeugs registriert wird. Ein beispielhafter Aufbau eines Stanzwerkzeugs ist in Figur 3 dargestellt und unten zu Figur 3 näher beschrieben.

Mit einer solchen Vorrichtung zur Überwachung eines Stanzprozesses ist es möglich, den aktuellen Werkzeugzustand, dessen zukünftigen Verlauf und bei auftretenden Anomalien den Fehlertyp zu bestimmen. Einhergehend mit diesen Erkenntnissen ist es möglich, das Wartungsintervall zu optimieren, die Ausfallwahrscheinlichkeit des Systems zu minimieren und die Produktions- und Logistikplanung zu optimieren, da Informationen zur verbleibenden Nutzungszeit generiert werden.

Das Wissen über die verbleibende Nutzungszeit ermöglicht eine genauere Produktions- und Logistikplanung. Ebenso können die Daten visualisiert werden und somit noch mehr Transparenz in der Produktion schaffen.

Gemäß einer beispielhaften Ausführungsform der Vorrichtung zeigen die ersten Daten die Kraft mittels einer Verbiegung oder Verformung des Stanzwerkzeugs an, welche aufgrund des Stanzprozesses auf das Stanzwerkzeug einwirkt. Diese Kraft wird im Folgenden auch als Pseudo-Kraft bezeichnet.

Dies bietet den technischen Vorteil, dass die Stanzkraft auf einfache Weise angezeigt werden kann, nämlich durch Messen der Verbiegung oder Verformung am Stanzwerkzeug, beispielsweise mittels Piezo-Sensoren, die am Stanzwerkzeug angebracht sind.

Gemäß einer beispielhaften Ausführungsform der Vorrichtung ist die Vorrichtung ausgebildet, basierend auf den ersten und zweiten Daten sowie zumindest einem vorgegebenen Schwellwert den Wartungszeitpunkt des Stanzwerkzeugs zu bestimmen.

Damit kann in vorteilhafter Weise das Wartungsintervall bzw. die Standzeit des Werkzeugs dynamisch auf Basis des Werkzeugzustands angepasst werden. Somit kann ein versehentliches Überschreiten der Belastungsgrenze unterbunden werden. Eine Optimierung des Wartungsintervalls und eine damit verbundene Reduktion von Wartungs- und Reparaturkosten ist deshalb möglich.

Gemäß einer beispielhaften Ausführungsform der Vorrichtung ist die Vorrichtung ferner ausgebildet, dritte Daten zu erhalten, welche eine Temperatur des Stanzwerkzeugs anzeigen, wobei das Prädiktionsmodell den Verschleißzustand des Stanzwerkzeugs anhand der dritten Daten in Kombination mit den ersten Daten und den zweiten Daten vorhersagt.

Damit kann in vorteilhafter Weise der Temperatureffekt, d.h. das Aufheizen des Stanzwerkzeugs durch die mit beim Stanzen einhergehende Reibung berücksichtigt werden, um den Verschleißzustand zu bestimmen.

Gemäß einer beispielhaften Ausführungsform der Vorrichtung ist das Prädiktionsmodell ausgebildet, eine Kompensation des thermischen Einflusses durch Erhitzung des Stanzwerkzeugs im Verlauf des Stanzprozesses in der Vorhersage mit abzubilden

Gemäß einer beispielhaften Ausführungsform der Vorrichtung sind die ersten Daten 101 Sensordaten von Piezosensoren, die in dem Stanzwerkzeug platziert sind.

Damit wird der technische Vorteil erreicht, dass über die Piezosensoren auf einfache und effiziente Weise eine Kraft, hier als "Pseudo-Kraft" bezeichnet, bestimmt werden kann, welche zur Ermittlung der mechanischen Arbeit genutzt werden kann.

Gemäß einer beispielhaften Ausführungsform der Vorrichtung umfassen die zweiten Daten eine Winkelinformation eines Drehgebers des Stanzwerkzeugs, insbesondere eine Winkelinformation eines Exzenters einer Exzenterpresse; oder die zweiten Daten umfassen eine Weginformation eines Weggebers des Stanzwerkzeugs, insbesondere eine Weginformation eines Kolbens einer Hydraulikpresse.

Damit wird der technische Vorteil erreicht, dass über die Winkelinformation bzw. die Weginformation auf einfache Weise die mechanische Arbeit bestimmt werden kann, welche Aufschluss gibt über das Verschleißverhalten des Stanzwerkzeugs.

Gemäß einer beispielhaften Ausführungsform der Vorrichtung sagt das Prädiktionsmodell den Verschleißzustand des Stanzwerkzeugs anhand von Zustandsgrößen des Stanzprozesses vorher, wobei die Zustandsgrößen folgendes umfassen: die Schwingungen und elastischen Verbiegungen, die bei dem Bewegen des Stanzwerkzeugs von der Ausgangsstellung in die Endstellung auf das Stanzwerkzeug einwirken; den Winkel oder den Weg, den das Stanzwerkzeug bei dem Bewegen von der Ausgangsstellung in die Endstellung zurückgelegt hat, eine Temperatur des Stanzwerkzeugs. Die Schwingungen und elastischen Verbiegungen werden in Form eines Körperschalls des Stanzwerkzeugs registriert.

Damit wird der technische Vorteil erreicht, dass anhand dieser Daten das Prädiktionsmodell den Verschleißzustand des Stanzwerkzeugs sehr genau vorhersagen kann und damit genaue Aussagen über den Wartungszeitpunkt möglich sind.

Erfindungsgemäß ist das Prädiktionsmodell ausgebildet, den Verschleißzustand des Stanzwerkzeugs basierend auf einer Kompensation eines thermischen Einflusses durch eine Erhitzung des Stanzwerkzeugs im Verlauf des Stanzprozesses vorherzusagen.

Damit wird der technische Vorteil erzielt, dass die thermischen Einflüsse auf den Stanzprozess, welche sich mit zunehmender Zeit und Erhitzung des Stanzwerkzeugs einstellen, auf genaue Weise bestimmt und kompensiert werden können. Damit wird die Genauigkeit der Prädiktion erhöht und der Verschleißzustand sowie der sich daraus ergebende Wartungszeitpunkt kann zuverlässiger bestimmt werden.

Gemäß einer beispielhaften Ausführungsform der Vorrichtung ist das Prädiktionsmodell ausgebildet, eine Anomalie in dem Stanzprozess basierend auf einem Abstand einer anhand der ersten Daten und der zweiten Daten ermittelten Zustandsgröße zu einer oder mehreren Referenzwerten zu bestimmen, und eine Anomalie zu detektieren, wenn der ermittelte Abstand einen vorgegebenen Grenzwert überschreitet.

Damit kann der Vorteil erzielt werden, dass auftretende Anomalien automatisch klassifiziert und prozesskritische Fehler noch während der Produktion identifiziert werden können.

Gemäß einer beispielhaften Ausführungsform der Vorrichtung ist die Vorrichtung ausgebildet, eine detektierte Anomalie zu speichern und basierend auf einer Fehlerklassifikation die Anomalie einem Fehlertyp zuzuordnen.

Damit wird der technische Vorteil erreicht, dass zusätzliches Wissen über den Stanzprozess generiert wird, welches genutzt werden kann, um den Stanzprozess besser einzustellen, um so auftretende Anomalien abzustellen und den Ausschuss zu verringern.

Gemäß einer beispielhaften Ausführungsform der Vorrichtung erfolgt die Fehlerklassifikation basierend auf einer zuvor erfolgten manuellen Zuordnung von bisher aufgetretenen Anomalien zu Fehlertypen und bei neu auftretenden Anomalien eine automatische Erweiterung der Fehlerklassifikation basierend auf einer Zuordnung der neu aufgetretenen Anomalien zu neuen Fehlertypen.

Damit wird der technische Vorteil erreicht, dass ein Experte sein Wissen einsetzen kann, um die Anomalien bestimmten Typen zuzuordnen, dass diese Klassifikation mit zunehmenden Klassifikationsdaten automatisch erfolgen kann, so dass das System durch Expertenwissen optimiert werden kann und dieses Wissen für automatische Klassifizierungen zugrunde legen kann. Der Ausschuss des Stanzprozesses lässt sich so wirkungsvoll minimieren. Prozesskritische Anomalien können ebenfalls aufgezeigt werden, um eine Beschädigung des Werkzeugs verhindern zu können.

Gemäß einer beispielhaften Ausführungsform der Vorrichtung ist die Vorrichtung ausgebildet, den Wartungszeitpunkt des Stanzwerkzeugs basierend auf einem Regressionsmodell zu bestimmen, welches eine Restlebenszeit des Stanzwerkzeugs abhängig von dem Verschleißzustand des Stanzwerkzeugs vorhersagt.

Damit wird der technische Vorteil erreicht, dass mit dem Regressionsmodell genaue Vorhersagen über die Restlebenszeit des Stanzwerkzeugs möglich sind, so dass eine gezielte Wartung bzw. Auswechslung des Stanzwerkzeugs erfolgen kann noch bevor es zu einem Bruch des Werkzeugs oder zu einer NIO (Nicht In Ordnung)-Produktion kommt, d.h. einer mängelbehafteten Produktion.

Gemäß einer beispielhaften Ausführungsform der Vorrichtung ist das Regressionsmodell ausgebildet, einen nichtlinearen Verschleißverlauf des Stanzwerkzeugs auf eine lineare Restlebenszeit des Stanzwerkzeugs abzubilden.

Damit wird der technische Vorteil erreicht, dass es dem Bedienpersonal anhand eines linearen Verlaufs leichter möglich ist, zu erkennen wann eine Wartung bzw. Auswechslung des Stanzwerkzeugs notwendig ist, als es anhand eines nicht-linearen Verschleißverlaufs möglich ist.

Gemäß einer beispielhaften Ausführungsform der Vorrichtung ist die Vorrichtung ausgebildet, das Regressionsmodell in einem Trainingszustand des Stanzprozesses mit einem vorgegebenen Trainingsdatensatz zu trainieren, und in einem Testzustand des Stanzprozesses mit einem Testdatensatz zu testen, welcher die ersten Daten und die zweiten Daten umfasst.

Damit wird der technische Vorteil erreicht, dass mit dem Training für "artgleiche" Eingangsdaten Ergebnisse vorhergesagt werden können. Eine Vorhersage wird daher durch das Training erst ermöglicht.

Gemäß einer beispielhaften Ausführungsform der Vorrichtung ist die Vorrichtung ausgebildet, den Wartungszeitpunkt des Stanzwerkzeugs in Abhängigkeit noch verbleibender Perioden des Stanzwerkzeugs von der Ausgangsstellung in die Endstellung zu bestimmen.

Damit wird der technische Vorteil erreicht, dass dem Bedienpersonal auf einfache und anschauliche Art angezeigt werden kann, wann die nächste Wartung erforderlich ist.

Gemäß einem zweiten Aspekt der Erfindung wird die Aufgabe gelöst durch ein Verfahren zur Überwachung eines Stanzprozesses gemäß Anspruch 16.

Mit einem solchen Verfahren zur Überwachung eines Stanzprozesses ist es möglich, den aktuellen Werkzeugzustand, dessen zukünftigen Verlauf und bei auftretenden Anomalien den Fehlertyp zu bestimmen. Einhergehend mit diesen Erkenntnissen ist es möglich, das Wartungsintervall zu optimieren, die Ausfallwahrscheinlichkeit des Systems zu minimieren und die Produktions- und Logistikplanung zu optimieren, da Informationen zur verbleibenden Nutzungszeit generiert werden.

Wie oben zur entsprechenden Vorrichtung beschrieben ergeben sich die gleichen Vorteile für das Verfahren, nämlich dass das Wissen über die verbleibende Nutzungszeit eine genauere Produktions- und Logistikplanung ermöglicht. Ebenso können die Daten visualisiert werden und somit noch mehr Transparenz in der Produktion schaffen.

Gemäß einem dritten Aspekt der Erfindung wird die Aufgabe gelöst durch ein Computerprogramm mit einem Programmcode zum Ausführen des Verfahrens gemäß dem zweiten Aspekt.

Damit wird der technische Vorteil erreicht, dass das Computerprogramm einfach auf einem Computer oder Steuergerät ausgeführt werden kann, um den Stanzprozess zu überwachen Es müssen lediglich die Daten mit geeigneter Sensorik und Messumformer erfasst und aufbereitet werden.

Das hier vorgestellte Konzept ist für jegliche Stanzmaschinen und Stanzwerkzeuge zur Blechverarbeitung aber auch zur Verarbeitung anderer Werkstoffe geeignet.

Mit dem hier beschriebenen Konzept ist es möglich, den aktuellen Werkzeugzustand, dessen zukünftigen Verlauf und bei auftretenden Anomalien den Fehlertyp zu bestimmen. Einhergehend mit diesen Erkenntnissen ist es möglich, das Wartungsintervall zu optimieren, die Ausfallwahrscheinlichkeit des Systems zu minimieren und die Produktions- und Logistikplanung zu optimieren, da Informationen zur verbleibenden Nutzungszeit generiert werden.

Das Wartungsintervall bzw. die Standzeit des Werkzeugs kann dynamisch auf Basis des Werkzeugzustands angepasst werden. Somit kann ein versehentliches Überschreiten der Belastungsgrenze unterbunden werden. Eine Optimierung des Wartungsintervalls und eine damit verbundene Reduktion von Wartungs- und Reparaturkosten ist deshalb möglich.

Des Weiteren können auftretende Anomalien automatisch klassifiziert und prozesskritische Fehler noch während der Produktion identifiziert werden.

Das Wissen über die verbleibende Nutzungszeit ermöglicht eine genauere Produktions- und Logistikplanung. Ebenso können die Daten visualisiert werden und somit noch mehr Transparenz in der Produktion schaffen.

Das Verschleißverhalten kann sichtbar gemacht werden und ermöglicht eine tiefergehende Ursachenforschung. Rückschlüsse auf mögliche Konstruktionsschwächen, systematische Fehler oder Handhabungsfehler können anschließend untersucht werden. Während der Wartung können die aufgetretenen Fehler herangezogen und somit zielgerichtet mögliche Fehlerquellen behoben werden.

### Kurze Figurenbeschreibung

Im Folgenden wird die Erfindung anhand von Ausführungsbeispielen und den Figuren näher beschrieben. In den Figuren zeigen:
- Fig. 1: eine schematische Darstellung einer Vorrichtung 100 zur Überwachung eines Stanzprozesses gemäß der Offenbarung;
- Fig. 2a/b: zwei beispielhafte Darstellungen 200a, 200b der Kraft-Winkel Informationen 200a, 200b als Eingangsdaten für das Prädiktionsmodell gemäß der Offenbarung;
- Fig. 3: eine beispielhafte Darstellung eines Stanzwerkzeugs 300 gemäß der Offenbarung;
- Fig. 4: eine beispielhafte Darstellung der Zustände 400a, 400b, 400c eines Stanzprozesses am Beispiel einer Exzenterpresse;
- Fig. 5: eine Nachrichtenflussdiagramm zur Veranschaulichung des Prädiktionsmodells 500 gemäß der Offenbarung; und
- Fig. 6: eine schematische Darstellung eines Verfahrens 600 zur Überwachung eines Stanzprozesses gemäß der Offenbarung;

### Detaillierte Beschreibung

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. In anderen Fällen werden bekannte Strukturen und Elemente in schematischer Form dargestellt, um das Beschreiben von einem oder mehreren Aspekten oder Ausführungsformen zu erleichtern.

In der folgenden Beschreibung wird auf Stanzprozesse und Stanzwerkzeuge Bezug genommen. Stanzen ist ein Trennverfahren zur Fertigung von Stanzteilen aus verschiedenen Werkstoffen, wie z.B. Blechen, Pappe, Textilien, etc. mit einer Stanzpresse oder durch Schlag mit einem Hammerkopf auf ein Schneidwerkzeug. Ein Stanzwerkzeug besteht aus dem Stempel, der die Innenform darstellt, und der Matrize, die eine entsprechend passende Öffnung aufweist. Der Stempel ist in der Regel im Oberteil/Unterteil verbaut. Figur 4 zeigt ein Beispiel eines Stanzwerkzeugs. Beim Hochleistungsstanzen sind Prozesse, wie Schweißen, Bördeln, Nieten und Umformen, in spezielle Folgeverbundwerkzeuge integriert. Solche Folgeverbundwerkzeuge besitzen neben Stanzstationen meistens auch Biegestationen und weitere Verarbeitungsstationen. Diese teilweise hochkomplizierten Werkzeuge gilt es effektiv einzusetzen und wirkungsvoll zu schützen.

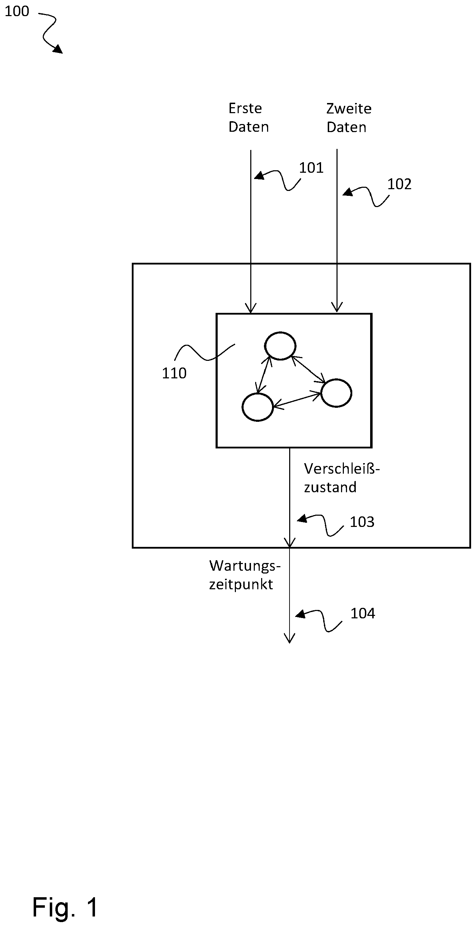

Fig. 1 zeigt eine schematische Darstellung einer Vorrichtung 100 zur Überwachung eines Stanzprozesses gemäß der Offenbarung. Die Vorrichtung 100 dient zur Überwachung eines Stanzprozesses, bei dem ein Stanzwerkzeug, z.B. ein Stanzwerkzeug 430 wie in Figur 4 näher beschrieben, zum Stanzen eines Werkstoffs periodisch von einer Ausgangsstellung 410 in eine Endstellung 410 bewegt wird, wie beispielsweise in Figur 4 anschaulich dargestellt. Dabei ist die Endstellung 410 gleich der Anfangsstellung 410, d.h. die Stellung, die nach einer Periode, also nach Durchlaufen eines Winkels von 360° wieder eingenommen wird.

Die Vorrichtung 100 ist ausgebildet, erste Daten 101 zu erhalten, welche eine Kraft anzeigen, die bei dem Bewegen des Stanzwerkzeugs von der Ausgangsstellung in die Endstellung durch das Stanzwerkzeug auf den Werkstoff ausgeübt wird. Die Kraft, die hier als Pseudo-Kraft bezeichnet wird, resultiert aus den Schwingungen und elastischen Verbiegungen, welche beim Stanzprozess auf das Stanzwerkzeug einwirkt.

Die Vorrichtung 100 ist ausgebildet, zweite Daten 102 zu erhalten, welche einen Winkel oder einen Weg anzeigen, die das Stanzwerkzeug bei dem Bewegen von der Ausgangsstellung in die Endstellung zurückgelegt hat.

Die Vorrichtung 100 ist ferner ausgebildet, einen Wartungszeitpunkt 104 des Stanzwerkzeugs basierend auf einem Prädiktionsmodell 110 zu bestimmen, welches anhand der ersten Daten 101 und der zweiten Daten 102 einen Verschleißzustand 103 des Stanzwerkzeugs vorhersagt.

Die Vorrichtung kann beispielsweise eine elektronische Schaltung umfassen oder einen Prozessor oder Controller zum Ausführen der oben angegebenen Funktionen. Hierbei kann es sich um eine numerische Steuerung zur Steuerung des Stanzprozesses handeln oder um einen separaten Prozessor oder Computer, auf dem die oben dargestellten Funktionen ausgeführt werden können.

Das Prädiktionsmodell 110 kann den Verschleißzustand 103 des Stanzwerkzeugs 430 basierend auf einem Zustandsmodell vorhersagen, welches aus den ersten Daten und den zweiten Daten bestimmt werden kann. Genau genommen stellt die Darstellung 430 nur das Oberteil des Stanzwerkzeuges dar, jedoch nicht das komplette Stanzwerkzeug. Zur Vereinfachung und leichteren Veranschaulichung wird hier jedoch das Stanzwerkzeug mit dem Bezugszeichen 430 dargestellt.

Die ersten Daten zeigen die Kraft mittels einer Verbiegung oder Verformung des Stanzwerkzeugs an, welche aufgrund des Stanzprozesses auf das Stanzwerkzeug 430 einwirkt.

Die Vorrichtung 100 kann ausgebildet sein, basierend auf den ersten und zweiten Daten und zumindest einem vorgegebenen Schwellwert den Wartungszeitpunkt des Stanzwerkzeugs zu bestimmen.

Die Vorrichtung kann ferner ausgebildet sein, dritte Daten zu erhalten, welche eine Temperatur des Stanzwerkzeugs anzeigen. Das Prädiktionsmodell kann den Verschleißzustand des Stanzwerkzeugs ferner anhand der dritten Daten in Kombination mit den ersten Daten und den zweiten Daten vorhersagen.

Die ersten Daten 101 können beispielsweise Sensordaten von Piezosensoren sein, die in dem Stanzwerkzeug platziert sind. Die Sensordaten liefern Daten, welche in dieser Offenbarung auch als Daten einer "Pseudo-Kraft" bezeichnet werden. Piezo-Sensoren beruhen auf dem piezoelektrischen Effekt, welcher die Änderung der elektrischen Polarisation und somit das Auftreten einer elektrischen Spannung an Festkörpern, wenn sie elastisch verformt werden, beschreibt. Anhand dieser Polarisationsänderung kann auf die ausgeübte Kraft rückgeschlossen werden.

Die zweiten Daten 102 können eine Winkelinformation 202 eines Drehgebers des Stanzwerkzeugs umfassen, beispielsweise eine Winkelinformation 401 eines Exzenters einer Exzenterpresse, wie in Figur 4 näher beschrieben.

Alternativ oder zusätzlich können die zweiten Daten 102 eine Weginformation 402 eines Weggebers des Stanzwerkzeugs umfassen, beispielsweise eine Weginformation eines Kolbens einer Hydraulikpresse.

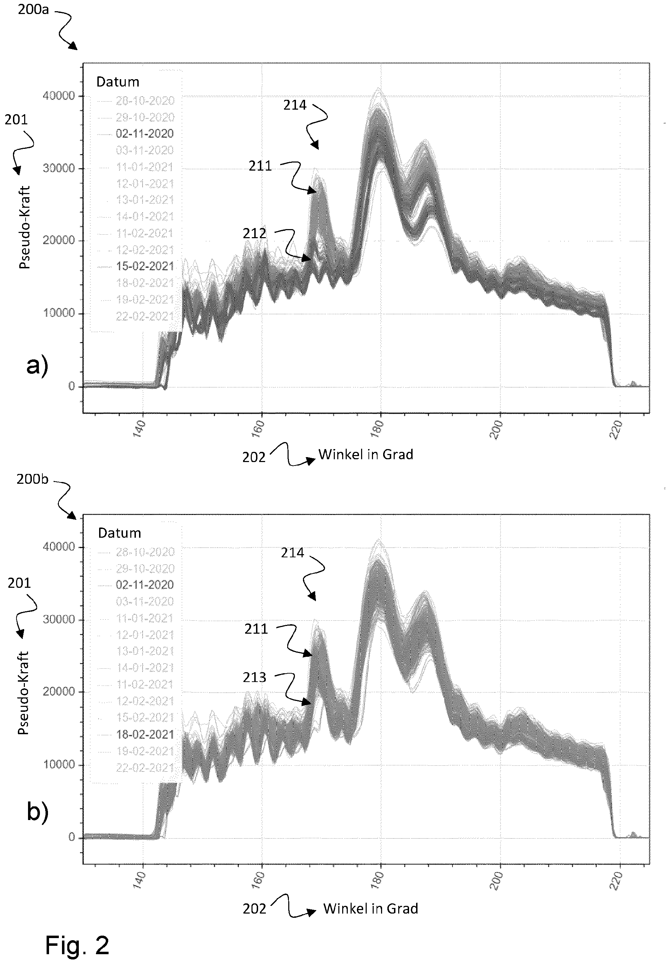

Das Prädiktionsmodell 110 kann den Verschleißzustand 103 des Stanzwerkzeugs 430 anhand von Zustandsgrößen des Stanzprozesses vorhersagen. Eine beispielhafte Darstellung eines Stanzwerkzeugs ist in Figur 3 gezeigt. Die Zustandsgrößen können beispielsweise folgendes umfassen: die Kraft 201 (siehe Figur 2), die bei dem Bewegen des Stanzwerkzeugs 430 von der Ausgangsstellung 410 in die Endstellung 420 durch das Stanzwerkzeug 430 auf den Werkstoff ausgeübt wird; den Winkel 202, 401 oder den Weg 402, den das Stanzwerkzeug bei dem Bewegen von der Ausgangsstellung in die Endstellung zurückgelegt hat; eine Temperatur des Stanzwerkzeugs.

Körperschall ist Schall, der sich in einem Festkörper, wie dem Stanzwerkzeug ausbreitet. Das umfasst Erschütterungen am Stanzwerkzeug, die Übertragung von Schwingungen oder auch die zur Werkstoffprüfung eingesetzten Ultraschallwellen. Das Stanzwerkzeug kann neben Normalspannungen auch Schubspannungen aufnehmen. Deshalb können sich im Stanzwerkzeug zwei verschiedene Arten Körperschallwellen ausbreiten, die sich unabhängig voneinander ausbreiten: Longitudinalwellen und Transversalwellen. Die Schallgeschwindigkeit wird beeinflusst durch die Dichte, die Schallhärte, die Querkontraktionszahl, das Elastizitätsmodul und das Schubmodul.

Das Prädiktionsmodell 110 kann ausgebildet sein, den Verschleißzustand 103 des Stanzwerkzeugs basierend auf einer Kompensation eines thermischen Einflusses 300 durch eine Erhitzung des Stanzwerkzeugs 430 im Verlauf des Stanzprozesses vorherzusagen. Der thermische Einfluss kann mittels der oben beschriebenen dritten Daten ermittelt werden. Das Prädiktionsmodell mit der zusätzlichen Temperaturinformation aufgrund der dritten Daten kann somit in der Lage sein, thermische Einflüsse zu kompensieren und zuverlässig Verschleißerscheinungen zu deuten.

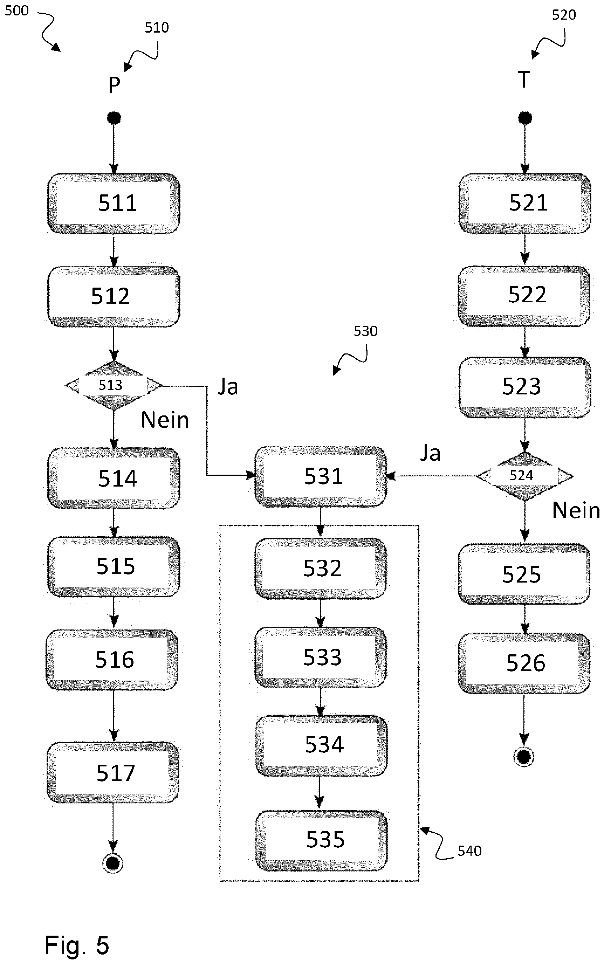

Das Prädiktionsmodell 110 kann ausgebildet sein, eine Anomalie 512, 523, wie beispielhaft in Figur 5 dargestellt, in dem Stanzprozess basierend auf einem Abstand der anhand der ersten Daten 101 und der zweiten Daten 102 ermittelten Zustandsgrößen zu einer oder mehreren Referenzwerten zu bestimmen, und eine Anomalie 512, 523 zu detektieren 513, 524, wenn der ermittelte Abstand einen vorgegebenen Grenzwert überschreitet. Zum Erkennen von Anomalien sind auch Machine-Learning Methoden einsetzbar.

Die Vorrichtung 100 kann ausgebildet sein, eine detektierte Anomalie zu speichern 531 und basierend auf einer Fehlerklassifikation 540 die Anomalie einem Fehlertyp zuzuordnen, wie beispielsweise zu Figur 5 näher beschrieben.

Die Fehlerklassifikation 540 kann basierend auf einer zuvor erfolgten manuellen Zuordnung 533 von bisher aufgetretenen Anomalien zu Fehlertypen erfolgen und bei neu auftretenden Anomalien kann eine automatische Erweiterung der Fehlerklassifikation 534 basierend auf einer Zuordnung der neu aufgetretenen Anomalien zu neuen Fehlertypen erfolgen, wie beispielsweise zu Figur 5 näher beschrieben.

Die Vorrichtung 100 kann ausgebildet sein, den Wartungszeitpunkt 104 des Stanzwerkzeugs basierend auf einem Regressionsmodell 514 zu bestimmen, welches eine Restlebenszeit des Stanzwerkzeugs 430 abhängig von dem Verschleißzustand 103 des Stanzwerkzeugs 430 vorhersagt, wie beispielsweise zu Figur 5 näher beschrieben.

Das Regressionsmodell 514 kann ausgebildet sein, einen nichtlinearen Verschleißverlauf des Stanzwerkzeugs 430 auf eine lineare Restlebenszeit des Stanzwerkzeugs abzubilden, wie beispielsweise zu Figur 5 näher beschrieben.

Die Vorrichtung 100 kann ausgebildet sein, das Regressionsmodell 514 in einem Trainingszustand 520 des Stanzprozesses mit einem vorgegebenen Trainingsdatensatz zu trainieren 525, und in einem Testzustand des Stanzprozesses mit einem Testdatensatz zu testen, welcher die ersten Daten 101 und die zweiten Daten 102 umfasst. Der Stanzprozess kann dann basierend auf realen Daten im Produktionsprozess ausgeführt werden, welche die ersten Daten 101 und die zweiten Daten 102 umfassen.

Die Vorrichtung 100 kann ausgebildet sein, den Wartungszeitpunkt 104 des Stanzwerkzeugs 430 in Abhängigkeit noch verbleibender Perioden des Stanzwerkzeugs von der Ausgangsstellung 410 in die Endstellung 420 und zurück zu bestimmen und anzuzeigen.

Fig. 2a/b zeigt zwei beispielhafte Darstellungen 200a, 200b der Kraft-Winkel Informationen 200a, 200b als Eingangsdaten für das Prädiktionsmodell gemäß der Offenbarung.

Die beiden Diagramme 200a, 200b zeigen die erfassten Kraftdaten (entsprechend den ersten Daten 101 aus Figur 1) in Bezug zu den erfassten Winkeldaten (entsprechend den zweiten Daten 102 aus Figur 1), jeweils als Kurvenschar über zwei Tage, wobei der erste Tag (02.11.2020) am Anfang des Messzeitraums liegt und der letzte Tag (15.02.2020) am Ende des Messzeitraums. Der Messzeitraum erstreckt sich also über mehrere Monate. In dem Diagramm 200a der Figur 2a sind die Kraft-Winkel Kurven des ersten Tages (02.11.2020) als erste Kurvenschar 211 dargestellt und die Kraft-Winkel Kurven des letzten Tages (15.02.2020) als zweite Kurvenschar 212. Die Messung wurde aufgrund des ausgeprägten Verschleißes am letzten Tag (15.02.2020) abgebrochen. Vergleicht man die beiden Kurvenscharen 211 und 212, so ist zu sehen, dass der erste markante Peak 214 bei der zweiten Kurvenschar 212 Änderungen in Form und Ausprägung verzeichnet.

Das untere Diagramm 200b zeigt die gleiche erste Kurvenschar 211 vom ersten Tag (02.11.2020) und eine dritte Kurvenschar 213 vom letzten Tag der Messung, die aber erst nach erfolgter Wartung (am 18.02.2020) aufgenommen wurde. Hier ist zu erkennen, dass nach erfolgter Wartung der erste markante Peak 214 wieder sichtbar ist. Die Reduktion des Peaks 214 stellt folglich eine verschleißbedingte Erscheinung dar.

Bislang werden die Werkzeuge nach statischen Intervallen gewartet. Unvorhersehbare Geschehnisse wie beispielsweise ein hochkommender Butzen, d.h. ein vom Blech ausgetrennter Abschnitt, ein Bedienfehler oder ein abreißender Schmierfilm können sich nachteilig auf die Standzeit eines Werkzeugs auswirken, sodass noch innerhalb des definierten Wartungsintervalls die physikalische Grenze des Werkzeugs erreicht werden kann. Ist dies der Fall, so kommt es im schlimmsten Fall zum Bruch der Schneidelemente.

Mithilfe von maschinellen Lernverfahren ("Machine-Learning Methoden") können die Kraft-Winkel-Kurven, wie in den Diagrammen 200a, 200b dargestellt, für die Zustandsbestimmung verwendet werden. Maschinelles Lernen ist ein Oberbegriff für die "künstliche" Generierung von Wissen aus Erfahrung: Ein künstliches System lernt aus Beispielen und kann diese nach Beendigung der Lernphase verallgemeinern. Dazu bauen Algorithmen beim maschinellen Lernen ein statistisches Modell auf, das auf Trainingsdaten beruht. Das heißt, es werden nicht einfach die Beispiele auswendig gelernt, sondern Muster und Gesetzmäßigkeiten in den Lerndaten erkannt, so dass das System auch unbekannte Daten beurteilen kann.

Des Weiteren können zusätzliche KI (Künstliche Intelligenz)- Modelle zum Erkennen und Klassifizieren von Fehlerzuständen genutzt werden. Der zukünftige Verlauf kann im einfachsten Fall über eine lineare Funktion approximiert werden. Sofern es die Datenlage jedoch zulässt, kann ein Regressionsmodell herangezogen werden, um die Vorhersagegenauigkeit zu erhöhen. Details hierzu sind unten zu Figur 5 weiter beschrieben.

Derzeit werden statische Wartungsintervalle verwendet, die bei unerwarteten Ereignissen wie z.B. Unfall oder Verschmutzung nicht ordnungsgemäß funktionieren. In diesem Fall könnte das Stanzwerkzeug in einem bereits kritischen Zustand sein. Wenn der Arbeiter dann die Produktion fortsetzt, wird das Werkzeug beschädigt oder es kann zerstört werden. Mit einem Modell für maschinelles Lernen kann eine Regression durchgeführt werden, um abzuschätzen, wie die wahrscheinlichste Entwicklung von *Wmech* aussehen wird. Mit diesen Informationen in Kombination mit dem Wissen über die physikalische Grenze kann die Restlebenszeit des Stanzwerkzeugs vorhergesagt werden. Wenn die historischen Daten Kurven enthalten, die Brüche anzeigen, können Informationen über die physikalische Grenze zugänglich gemacht werden.

Fig. 3 zeigt eine beispielhafte Darstellung eines Stanzwerkzeugs 300. Das Stanzwerkzeug ist vielschichtig aufgebaut und umfasst Funktionsplatten 310 und Gestellplatten 320. Die Gestellplatten 320 umfassen untere Aufspannleisten 326, auf denen die Grundplatte 325 angeordnet ist. Auf der Grundplatte 325 sind die Stanzstreifen 324 des Produkts in der Bearbeitungsebene angeordnet. Darüber befindet sich eine Zwischenplatte 323, auf der Zwischenplatte 323 ist die Kopfplatte 322 angeordnet und über der Kopfplatte 322 die obere Aufspannplatte 321.

Die Funktionsplatten 310 umfassen die gehärtete Schneidplatte 314, mit welcher das Schneiden ausgeführt wird. Darüber befindet sich die gehärtete Führungs-/Abstreifplatte 313. Beide Platten 314, 313 befinden sich zwischen der Zwischenplatte 323 und der Grundplatte 325. Über der Zwischenplatte 323 sind die gehärtete oder weiche Stempelhalteplatte 312 und darüber die gehärtete Druckplatte 311 angeordnet.

Fig. 4 zeigt eine beispielhafte Darstellung der Zustände 400a, 400b, 400c eines Stanzprozesses am Beispiel einer Exzenterpresse.

Figur 4 zeigt ein Stanzwerkzeug 430 am Beispiel einer Exzenterpresse. Das Stanzwerkzeug 430 wird zum Stanzen eines Werkstoffs periodisch von einer Ausgangsstellung 410 in eine Endstellung 410 bewegt, welche aufgrund der Periodizität des Stanzprozesses mit der Ausgangsstellung 410 übereinstimmt. In der Darstellung 400a befindet sich das Stanzwerkzeug 430 in einer ersten Stellung, bei der es einen Winkel 401 von α=90° einnimmt, was einem Weg x 402 entspricht. In der Darstellung 400b befindet sich das Stanzwerkzeug 430 in einer zweiten Stellung, bei der es einen Winkel 401 von α=120° einnimmt, was einem Weg x 402 entspricht. In der Darstellung 400c befindet sich das Stanzwerkzeug 430 in einer dritten Stellung, bei der es einen Winkel 401 von α=160° einnimmt, was einem Weg x 402 entspricht.

Das Stanzwerkzeug 430 wird periodisch zwischen einer Ausgangsstellung 410 (die hier nur angedeutet ist) über eine Zwischenstellung 420 (die hier nur angedeutet ist), auch als unterer Totpunkt bezeichnet, in eine Endstellung 410, welche wieder der Anfangsstellung 410 entspricht, bewegt, um das Stanzen zu ermöglichen. Die Anfangsstellung 410 entspricht einem Winkel 401 von α=0°, die Zwischenstellung 420 entspricht einem Winkel 401 von α=180° und die Endstellung 410 entspricht wieder einem Winkel 401 von α=0°.

Fig. 5 zeigt eine Nachrichtenflussdiagramm zur Veranschaulichung des Prädiktionsmodells 500 gemäß der Offenbarung. Bei dem Prädiktionsmodell kann es sich um das zu Figur 1 bereits beschriebene Prädiktionsmodell 110 handeln, mit dem ausgehend von ersten und zweiten Daten 101, 102 ein Verschleißzustand 103 des Stanzwerkzeugs und damit ein Wartungszeitpunkt 104 bestimmt werden kann.

Das Prädiktionsmodell 500 umfasst drei Hauptblöcke, welche den drei verschiedenen Zuständen des Prädiktionsmodells 500 entsprechen, nämlich Produktion 510, Training 520 und Klassifizier-Training 530. Beim Training 520 wird das Prädiktionsmodell mit Trainingsdaten beaufschlagt, um das Modell geeignet einzustellen. Beim Klassifizier-Training wird die Klassifikation des Modells anhand der aufgetretenen Ereignisse geeignet eingestellt. Bei der Produktion ist das Prädiktionsmodell 500 im Arbeitszustand, in dem entsprechend Figur 1 der Verschleißzustand 103 des Stanzwerkzeugs bestimmt werden kann und ein geeigneter Wartungszeitpunkt basierend auf den zuvor gemachten Einstellungen ermittelt werden kann.

Im Folgenden wird das Prädiktionsmodell 500 anhand der einzelnen Prozessschritte des Nachrichtenflussdiagramms näher beschrieben.

Der Trainingsblock 520 beginnt mit der Datenaufbereitung 521. In der Datenaufbereitung 521 werden die Daten aller erforderlichen Kraftmessungen eingelesen, welche den ersten Daten 101 entsprechen, die zu Figur 1 beschrieben sind. Die Messungen können beispielsweise in CSV-Dateien gespeichert sein. Jede Datei enthält Daten eines Stanzhubes. Ungültige Daten werden hier aussortiert, so dass sie nicht zur Prädiktion berücksichtigt werden. Mit den Daten werden Kraft-Winkel Kurven interpoliert, wie beispielsweise in Figur 2 dargestellt.

Ferner können Temperaturwerte eingelesen werden, beispielsweise entsprechend Figur 1 als dritte Daten (nicht in Figur 1 dargestellt), um mit diesen Werten das thermische Verhalten des Stanzprozesses berücksichtigen zu können. Die Kraft-Winkel Kurven werden interpoliert und der thermische Einfluss wird entsprechend kompensiert.

An die Datenaufbereitung 521 schließt sich das automatische Labeln 522 bzw. Markieren an. Zum Trainieren der maschinellen Lernmodelle wird ein Datensatz genutzt, der mindestens einen kompletten Lebenszyklus enthält, d.h. von dem Zustand "Werkzeug frisch gewartet" über den Zustand "Werkzeugbruch" bzw. "Ausschussproduktion". Die letzte Kurve (entsprechend dem Zustand "Ausschussproduktion") erhält das Label 0 % und die erste (entsprechend dem Zustand "Werkzeug frisch gewartet") das Label 100 %. Alle Kraft-Winkel-Kurven erhalten in absteigender Reihenfolge die entsprechenden Prozentwerte. Dabei stehen die Prozentangaben für die verbleibende Standzeit (engl.: "Remaining Useful Life", RUL).

An das automatische Labeln 522 schließt sich die Anomalie Erkennung 523, 524 an. Zum Erkennen von Anomalien können neben maschinellen Lernalgorithmen wie beispielsweise der "Local Outlier Factor" oder die "One-Class Support Vector Machine" und "Deep Learning" Algorithmen wie der Autoencoder auch simplere mathematische Methoden verwendet werden.

Für den Trainingsdatensatz werden mehrere Referenzkurven durch Mittelwertbildung generiert. Ist die Differenz zwischen den Kraft-Winkel-Kurven und der jeweiligen Referenzkurve größer als eine vordefinierte Grenze, so handelt es sich um eine Anomalie. Die Grenze kann durch das Produkt der Standardabweichung und einen zu bestimmenden Faktor definiert werden. Der Faktor kann von einem Experten so angepasst werden, bis sich das gewünschte Resultat einstellt und alle Produktionsfehler zuverlässig erkannt werden.

Ist eine Anomalie erkannt worden 524, so geht die Verarbeitung weiter mit dem Block Klassifizier-Training 530, und zwar mit Schritt 531. Ist keine Anomalie erkannt worden 524, so geht die Verarbeitung weiter mit dem Regressionstraining 525.

Beim Regressionstraining 525 bzw. Regressor-Training wird der von Ausreißern bereinigte Datensatz anschließend in einen Trainings- und Testdatensatz aufgeteilt. Ein "XGBoost"-Algorithmus kann hier beispielsweise für die Regression herangezogen werden. Das trainierte Modell ist in der Lage den aktuellen Zustand des Werkzeugs als RUL in % anzugeben. Nach dem Training wird das Modell mit einem bisher unbekannten Datensatz getestet. Da beim Labeln die Zielwerte linear abfallen, kann für die Schätzung des zukünftigen Verlaufs ein simpler Dreisatz verwendet werden. Das Regressionsmodell wirkt wie eine Linearisierung, da sich der Verschleiß nichtlinear verhält, jedoch die RUL bzw. Restlebenszeit-Entwicklung linear ist. Mit der Näherung der zukünftigen Werte ist es möglich, die verbleibende Standzeit in Anzahl verbleibender Hübe auszudrücken, was einen erheblichen Vorteil für die Produktion mit sich bringt. Sollte es sich herausstellen, dass die lineare Näherung zu ungenau sein sollte, so kann ein zweites Regressionsmodell verwendet werden, um den Verlauf genauer zu schätzen. Hierfür kann jedoch eine umfangreichere Datenbasis notwendig sein.

Nach dem Regressionstraining 525 geht es weiter mit dem Prozessschritt "Modell speichern" 526. Hier wird das trainierte Modell wird für den weiteren Einsatz abgespeichert.

Wie oben erwähnt, geht die Verarbeitung für den Fall, dass in Schritt 523/524 eine Anomalie erkannt wurde, weiter mit dem Block Klassifizier-Training 530, und zwar mit Schritt 531, in dem die erkannten Anomalien gespeichert werden.

Nach dem Speichern der Anomalien geht es zum Schritt "Anomalien Clustern" 532. Das Clustern der gefundenen Anomalien dient als Unterstützung für das nachfolgende manuelle Labeln 533. Ähnliche Fehlertypen sollen gruppiert werden, sodass der Experte lediglich die Gruppen labeln muss und nicht jede einzelne Kurve.

Im Prozessschritt "Manuelles Labeln" 533 begutachtet ein Experte für Stanztechnik die gebildeten Gruppen, kontrolliert die Güte des Clusterns und vergibt entsprechende Label.

Es folgt der Prozessschritt "Klassifikations-Training" 534 bzw. Klassifizierer-Training. Der nun erzeugte Datensatz dient zum Trainieren und Testen des Klassifizierers, sodass eine automatische Fehlertyp Erkennung während der Produktion realisierbar ist. Ein Konfidenzwert kann verwendet werden, um zu entscheiden, ob es sich bei einem gefundenen Fehler um einen neuartigen Fehlertyp handelt.

Nach dem "Klassifikations-Training" 534 schließt sich der Schritt "Modell speichern" 535 an. Am Ende des vorausgehend beschriebenen Prozesses kann der trainierte Klassifizierer ebenfalls abgespeichert werden.

Bei der Produktion wird der Block 510 durchlaufen. In der Produktion 510 ist der Arbeitsablauf weitgehend identisch zu dem des Trainings 520. Die Kraft-Winkel-Kurven können hier lediglich sequenziell eingelesen werden und nicht "batchweise" bzw. stapelweise. Sobald ein bereits trainierter Klassifizierer zur Verfügung steht, ersetzt dieser den Block "Klassifizier-Training 530".

Die einzelnen Prozessschritte aus dem Block "Produktion" 510 werden zur besseren Lesbarkeit hier nochmals kurz beschrieben.

Der Produktionsblock 510 beginnt mit der Datenaufbereitung 511. In der Datenaufbereitung 511 werden die Daten aller erforderlichen Kraftmessungen eingelesen, welche den ersten Daten 101 entsprechen, die zu Figur 1 beschrieben sind. Die Messungen können beispielsweise in CSV-Dateien gespeichert sein. Die Datenaufbereitung 511 ist analog zur oben beschriebenen Datenaufbereitung 521 des Trainingsblocks 520.

An die Datenaufbereitung 511 schließt sich die Anomalie Erkennung 512, 513 an. Zum Erkennen von Anomalien können neben maschinellen Lernalgorithmen wie beispielsweise der "Local Outlier Factor" oder die "One-Class Support Vector Machine" und "Deep Learning" Algorithmen wie der Autoencoder auch simplere mathematische Methoden verwendet werden, wie oben zum Schritt 523/524 des Trainingsblocks 520 beschrieben.

Ist eine Anomalie erkannt worden 513, so geht die Verarbeitung weiter mit dem Block Klassifizier-Training 530, und zwar mit Schritt 531. Ist keine Anomalie erkannt worden 513, so geht die Verarbeitung weiter mit dem Regressionsmodell 514. Das Regressionsmodell 514 wird initial einmal geladen und steht damit für jede neue Kraft-Winkel-Kurve zur Verfügung. Das zuvor bestimmte Regressionsmodell, das in Schritt 526 gespeichert wurde, wird hier verwendet. Allerdings muss ein Herausfiltern der Anomalien nicht zwingend erfolgen. Bei der Verwendung von Deep Learning Methoden können Anomalien auch für die RUL (Restlebensdauer)-Schätzung enthalten bleiben.

Danach schließt sich der Schritt "Zustandsschätzung" 515 an. Wie oben zum Schritt 525 beschrieben, ist das trainierte Modell in der Lage den aktuellen Zustand des Stanzwerkzeugs als RUL in % anzugeben.

Es folgt der Prozessschritt "Regression" 516, in dem das Regressionsmodell mit den oben beschriebenen Daten der Produktion beaufschlagt werden kann, beispielsweise entsprechend den ersten Daten 101 und den zweiten Daten 102 wie oben zu Figur 1 beschrieben. Da beim Labeln die Zielwerte linear abfallen, kann für die Schätzung des zukünftigen Verlaufs ein simpler Dreisatz verwendet werden. Das Regressionsmodell wirkt wie eine Linearisierung, da sich der Verschleiß nichtlinear verhält, jedoch die RUL bzw. Restlebenszeit-Entwicklung linear ist. Mit der Näherung der zukünftigen Werte ist es möglich, die verbleibende Standzeit in Anzahl verbleibender Hübe auszudrücken, was einen erheblichen Vorteil für die Produktion mit sich bringt. Sollte es sich herausstellen, dass die lineare Näherung zu ungenau sein sollte, so kann ein zweites Regressionsmodell verwendet werden, um den Verlauf genauer zu schätzen. Hierfür kann jedoch eine umfangreichere Datenbasis notwendig sein.

Nach der Regression 516 geht es weiter mit dem Prozessschritt "Übertragen der ermittelten Daten" 517, in dem die Ergebnisse der Prädiktion 500 angezeigt werden, z.B. in einer Datei gespeichert und zur Anzeige weitergeleitet werden können.

Im Folgenden wird ein generalisierter Ansatz beschrieben, mit dem der hier beschriebene Prozess weiter verbessert werden kann, so dass sich der Prozess nicht nur für einen Stanzprozess mit einem bestimmten Stanzwerkzeug, sondern für eine Vielzahl von Stanzprozessen mit verschiedenen Stanzwerkzeugen oder einen Stanzprozess mit jeweils unterschiedlichen Stanzwerkzeugen eignet.

Um die physikalische Grenze eines Stanzwerkzeugs bestimmen zu können, kann es notwendig sein, dass der Trainingsdatensatz den kompletten Lebenszyklus des Werkzeugs und somit Daten zur physikalischen Grenze enthält. Das Generieren eines solchen Datensatzes ist sehr zeit- und kostenintensiv, da das Risiko, während der Experimentierphase Ausschuss zu produzieren, hoch ist. Des Weiteren besteht die Möglichkeit, dass die Schneidelemente brechen können. In einem generalisierten Ansatz kann dieses physikalische Limit mathematisch approximiert werden.

Da sich die Kraft-Winkel-Kurven der jeweiligen Stanzwerkzeuge verschiedener Stanzprozesse zum Teil stark unterscheiden, kann es notwendig sein, für jedes einzelne Werkzeug ein separates KI-Konstrukt zu bilden, entsprechend dem hier beschriebenen Nachrichtenflussdiagramm des Prädiktionsmodells der Figur 5.

In einer verallgemeinerten Form des Prädiktionsmodells können mithilfe einer Merkmalsextraktion sogenannte "Feature Vektoren", d.h. Merkmalsvektoren gebildet werden, welche alle notwendigen Informationen enthalten und einen allgemeineren Prädiktionsansatz zulassen, der auch für die Prädiktion des Stanzprozesses mit verschiedenen Stanzwerkzeugen geeignet ist. Damit kann die Prädiktion effizienter gestaltet werden, indem für mehrere Werkzeuge ein und dasselbe KI-Konstrukt bzw. Prädiktionsmodell verwendet werden kann.

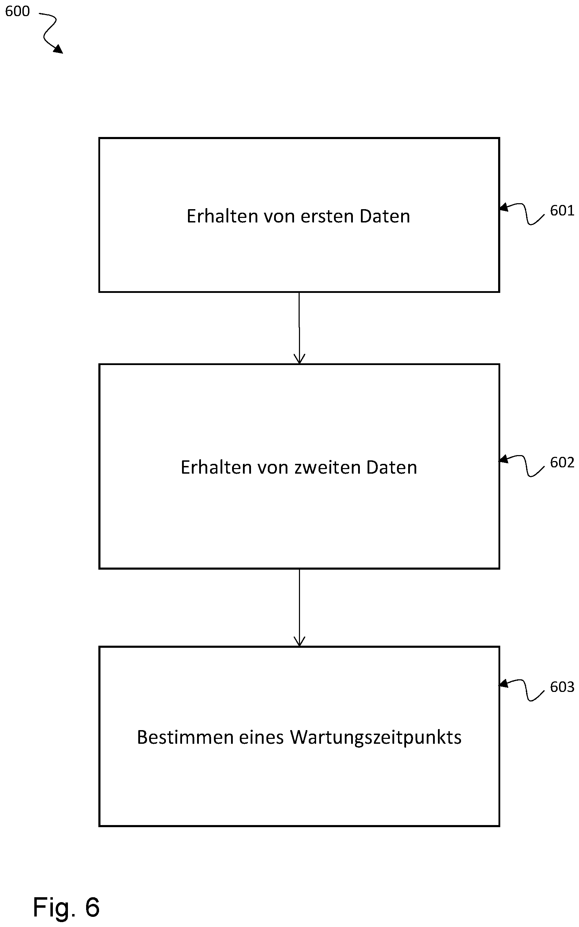

Fig. 6 zeigt eine schematische Darstellung eines Verfahrens 600 zur Überwachung eines Stanzprozesses gemäß der Offenbarung.

Das Verfahren 600 eignet sich zur Überwachung eines Stanzprozesses, bei dem ein Stanzwerkzeug 430, wie oben zu Figur 4 beispielhaft dargestellt, zum Stanzen eines Werkstoffs periodisch von einer Ausgangsstellung 410 in eine Endstellung 420 bewegt wird.

Das Verfahren weist die folgenden Schritte auf:
Erhalten 601 von ersten Daten 101, wie z.B. oben zu Figur 1 beschrieben, welche eine Kraft anzeigen, die bei dem Bewegen des Stanzwerkzeugs von der Ausgangsstellung in die Endstellung durch das Stanzwerkzeug auf den Werkstoff ausgeübt wird;
Erhalten 602 von zweiten Daten 102, wie z.B. oben zu Figur 1 beschrieben, welche einen Winkel oder einen Weg anzeigen, die das Stanzwerkzeug bei dem Bewegen von der Ausgangsstellung in die Endstellung zurückgelegt hat; und
Bestimmen 603 eines Wartungszeitpunkts des Stanzwerkzeugs 430 basierend auf einem Prädiktionsmodell, welches anhand der ersten Daten und der zweiten Daten einen Verschleißzustand des Stanzwerkzeugs vorhersagt, wie z.B. oben zu den Figuren 1 bis 5 beschrieben.

### Bezugszeichenliste

- 100: Vorrichtung zur Überwachung eines Stanzprozesses
- 101: erste Daten
- 102: zweite Daten
- 103: Verschleißzustand
- 104: Wartungszeitpunkt
- 110: Prädiktionsmodell

- 200a: Kraft-Winkel Information
- 200b: Kraft-Winkel Information
- 201: Kraft bzw. Pseudokraft
- 202: Winkel
- 211: erste Kurvenschar
- 212: zweite Kurvenschar
- 213: dritte Kurvenschar
- 214: Peak bzw. Spitzenwert

- 300: Stanzwerkzeug
- 310: Funktionsplatten
- 311: Druckplatte
- 312: Stempelhalteplatte
- 313: Führungs-/Abstreifplatte
- 314: Schneidplatte
- 320: Gestellplatten
- 321: Aufspannplatte oben
- 322: Kopfplatte
- 323: Zwischenplatte
- 324: Stanzstreifen (Produkt)
- 325: Grundplatte
- 326: Aufspannleisten unten

- 400a: erster Zustand eines Stanzprozesses am Beispiel einer Exzenterpresse
- 400b: zweiter Zustand des Stanzprozesses
- 400c: dritter Zustand des Stanzprozesses
- 401: Winkelinformation
- 402: Weginformation
- 410: Ausgangsstellung und Endstellung des Stanzwerkzeugs
- 420: Zwischenstellung des Stanzwerkzeugs
- 430: Stanzwerkzeug

- 500: Nachrichtenflussdiagramm zur Veranschaulichung des Prädiktionsmodells
- 510: Produktion
- 520: Training
- 530: separate Pipeline zum Klassifikationstraining
- 511: Datenaufbereitung
- 512: Anomalie-Detektion
- 513: Erkennen einer Anomalie
- 514: Lade Regressionsmodell
- 515: Schätze Zustand
- 516: Regression
- 517: Sende Datei
- 521: Datenaufbereitung
- 522: Markierung
- 523: Anomalie-Detektion
- 524: Erkennen einer Anomalie
- 525: Regressions-Training
- 526: Speichern der Modelle

- 600: Verfahren zur Überwachung eines Stanzprozesses
- 601: erster Verfahrensschritt
- 602: zweiter Verfahrensschritt
- 603: dritter Verfahrensschritt

## Patentansprüche

1. Vorrichtung (100) zur Überwachung eines Stanzprozesses, bei dem ein Stanzwerkzeug (430, 300) zum Stanzen eines Werkstoffs periodisch von einer Ausgangsstellung (410) in eine Endstellung (420) bewegt wird, wobei die Vorrichtung (100) ausgebildet ist,
erste Daten (101) zu erhalten, welche eine Kraft anzeigen, die bei dem Bewegen des Stanzwerkzeugs von der Ausgangsstellung in die Endstellung durch das Stanzwerkzeug auf den Werkstoff ausgeübt wird;
zweite Daten (102) zu erhalten, welche einen Winkel oder einen Weg anzeigen, die das Stanzwerkzeug bei dem Bewegen von der Ausgangsstellung in die Endstellung zurückgelegt hat; **dadurch gekennzeichnet, dass**
die Vorrichtung ferner ausgebildet ist
einen Wartungszeitpunkt (104) des Stanzwerkzeugs basierend auf einem Prädiktionsmodell (110) zu bestimmen, welches anhand der ersten Daten (101) und der zweiten Daten (102) einen Verschleißzustand (103) des Stanzwerkzeugs vorhersagt;
wobei das Prädiktionsmodell (110) ausgebildet ist, den Verschleißzustand (103) des Stanzwerkzeugs basierend auf einer Kompensation eines thermischen Einflusses (300) durch eine Erhitzung des Stanzwerkzeugs (430) im Verlauf des Stanzprozesses vorherzusagen.

2. Vorrichtung (100) nach Anspruch 1,
wobei die ersten Daten die Kraft mittels einer Verbiegung oder Verformung des Stanzwerkzeugs anzeigen, welche aufgrund des Stanzprozesses auf das Stanzwerkzeug (430) einwirkt.

3. Vorrichtung (100) nach Anspruch 1 oder 2,
wobei die Vorrichtung (100) ausgebildet ist, basierend auf den ersten und zweiten Daten und zumindest einem vorgegebenen Schwellwert den Wartungszeitpunkt (104) des Stanzwerkzeugs (430) zu bestimmen.

4. Vorrichtung (100) nach Anspruch 3,
wobei die Vorrichtung ferner ausgebildet ist, dritte Daten zu erhalten, welche eine Temperatur des Stanzwerkzeugs anzeigen, wobei das Prädiktionsmodell den Verschleißzustand des Stanzwerkzeugs anhand der dritten Daten in Kombination mit den ersten Daten (101) und den zweiten Daten (102) vorhersagt.

5. Vorrichtung (100) nach Anspruch 4,
wobei das Prädiktionsmodell (110) ausgebildet ist, eine Kompensation des thermischen Einflusses (300) durch Erhitzung des Stanzwerkzeugs (430) im Verlauf des Stanzprozesses in der Vorhersage mit abzubilden.

6. Vorrichtung (100) nach einem der vorstehenden Ansprüche,
wobei die ersten Daten (101) Sensordaten von Piezosensoren sind, die in dem Stanzwerkzeug platziert sind.

7. Vorrichtung (100) nach einem der vorstehenden Ansprüche,
wobei die zweiten Daten (102) eine Winkelinformation (202, 401) eines Drehgebers des Stanzwerkzeugs umfassen, insbesondere eine Winkelinformation (401) eines Exzenters einer Exzenterpresse (400a, 400b, 400c); oder
wobei die zweiten Daten (102) eine Weginformation (402) eines Weggebers des Stanzwerkzeugs umfassen, insbesondere eine Weginformation eines Kolbens einer Hydraulikpresse.

8. Vorrichtung (100) nach einem der vorstehenden Ansprüche,
wobei das Prädiktionsmodell (110) den Verschleißzustand (103) des Stanzwerkzeugs (430) anhand von Zustandsgrößen des Stanzprozesses vorhersagt, wobei die Zustandsgrößen folgendes umfassen:
Schwingungen und elastischen Verbiegungen (201), die bei dem Bewegen des Stanzwerkzeugs (430) von der Ausgangsstellung (410) in die Endstellung (420) auf das Stanzwerkzeug (430) einwirken;
den Winkel (202, 401) oder den Weg (402), den das Stanzwerkzeug bei dem Bewegen von der Ausgangsstellung in die Endstellung zurückgelegt hat,
eine Temperatur des Stanzwerkzeugs.

9. Vorrichtung (100) nach einem der vorstehenden Ansprüche,
wobei das Prädiktionsmodell (110) ausgebildet ist, eine Anomalie (512, 523) in dem Stanzprozess basierend auf einem Abstand einer anhand der ersten Daten (101) und der zweiten Daten (102) ermittelten Zustandsgröße zu einer oder mehreren Referenzwerten zu bestimmen, und eine Anomalie (512, 523) zu detektieren (513, 524), wenn der ermittelte Abstand einen vorgegebenen Grenzwert überschreitet.

10. Vorrichtung (100) nach Anspruch 9,
wobei die Vorrichtung (100) ausgebildet ist, eine detektierte Anomalie zu speichern (531) und basierend auf einer Fehlerklassifikation (540) die Anomalie einem Fehlertyp zuzuordnen.

11. Vorrichtung (100) nach Anspruch 10,
wobei die Fehlerklassifikation (540) basierend auf einer zuvor erfolgten manuellen Zuordnung (533) von bisher aufgetretenen Anomalien zu Fehlertypen erfolgt und bei neu auftretenden Anomalien eine automatische Erweiterung der Fehlerklassifikation (534) basierend auf einer Zuordnung der neu aufgetretenen Anomalien zu neuen Fehlertypen erfolgt.

12. Vorrichtung (100) nach einem der vorstehenden Ansprüche,
wobei die Vorrichtung (100) ausgebildet ist, den Wartungszeitpunkt (104) des Stanzwerkzeugs basierend auf einem Regressionsmodell (514) zu bestimmen, welches eine Restlebenszeit des Stanzwerkzeugs (430) abhängig von dem Verschleißzustand (103) des Stanzwerkzeugs (430) vorhersagt.

13. Vorrichtung (100) nach Anspruch 12,
wobei das Regressionsmodell (514) ausgebildet ist, einen nichtlinearen Verschleißverlauf des Stanzwerkzeugs (430) auf eine lineare Restlebenszeit des Stanzwerkzeugs abzubilden.

14. Vorrichtung (100) nach Anspruch 12 oder 13,
wobei die Vorrichtung (100) ausgebildet ist, das Regressionsmodell (514) in einem Trainingszustand (520) des Stanzprozesses mit einem vorgegebenen Trainingsdatensatz zu trainieren (525), und in einem Testzustand des Stanzprozesses mit einem Testdatensatz zu testen, welcher die ersten Daten (101) und die zweiten Daten (102) umfasst.

15. Vorrichtung (100) nach einem der vorstehenden Ansprüche,
wobei die Vorrichtung (100) ausgebildet ist, den Wartungszeitpunkt (104) des Stanzwerkzeugs (430) in Abhängigkeit noch verbleibender Perioden des Stanzwerkzeugs von der Ausgangsstellung (410) in die Endstellung (420) zu bestimmen.

16. Verfahren (600) zur Überwachung eines Stanzprozesses, bei dem ein Stanzwerkzeug (430) zum Stanzen eines Werkstoffs periodisch von einer Ausgangsstellung (410) in eine Endstellung (420) bewegt wird, wobei das Verfahren die folgenden Schritte aufweist:
Erhalten (601) von ersten Daten (101), welche eine Kraft anzeigen, die bei dem Bewegen des Stanzwerkzeugs von der Ausgangsstellung in die Endstellung durch das Stanzwerkzeug auf den Werkstoff ausgeübt wird;
Erhalten (602) von zweiten Daten (102), welche einen Winkel oder einen Weg anzeigen, die das Stanzwerkzeug bei dem Bewegen von der Ausgangsstellung in die Endstellung zurückgelegt hat; **dadurch gekennzeichnet, dass**
das Verfahren die folgenden Schritte ferner aufweiset
Bestimmen (603) eines Wartungszeitpunkts des Stanzwerkzeugs (430) basierend auf einem Prädiktionsmodell (110), welches anhand der ersten Daten (101) und der zweiten (102) Daten einen Verschleißzustand (103) des Stanzwerkzeugs vorhersagt;
wobei das Prädiktionsmodell (110) den Verschleißzustand (103) des Stanzwerkzeugs basierend auf einer Kompensation eines thermischen Einflusses (300) durch eine Erhitzung des Stanzwerkzeugs (430) im Verlauf des Stanzprozesses vorhersagt.

## Claims

1. Device (100) for monitoring a punching process in which a punching tool (430, 300) for punching a material is periodically moved from an initial position (410) to an end position (420), wherein the device (100) is designed,
to obtain first data (101) indicating a force exerted by the punching tool on the material when the punching tool is moved from the initial position to the end position
to obtain second data (102) indicating an angle or a distance travelled by the punching tool when moving from the initial position to the end position; **characterized in that**
the device is further designed to
to determine a time for maintenance (104) of the punching tool based on a prediction model (110) that predicts a wear condition (103) of the punching tool based on the first data (101) and the second data (102)
wherein the prediction model (110) is configured to predict the wear state (103) of the punching tool based on a compensation of a thermal influence (300) by a heating of the punching tool (430) during the punching process.

2. Device (100) according to claim 1,
wherein the first data indicates the force by means of a bending or deformation of the punching tool which have an impact on the punching tool (430) due to the punching process.

3. Device (100) according to claim 1 or 2,
wherein the device (100) is configured to determine the time for maintenance (104) of the punching tool (430) based on the first and second data and at least one predetermined threshold value.

4. Device (100) according to claim 3,
wherein the apparatus is further adapted to obtain third data indicating a temperature of the punching tool, wherein the prediction model predicts the wear state of the punching tool based on the third data in combination with the first data (101) and the second data (102).

5. Device (100) according to claim 4,
wherein the prediction model (110) is designed to include a compensation of the thermal influence (300) by heating of the punching tool (430) during the punching process.

6. Device (100) according to any of the preceding claims,
wherein the first data (101) is sensor data from piezo sensors placed in the punching tool.

7. Device (100) according to any of the preceding claims,
wherein the second data (102) comprises angle information (202, 401) of a rotary encoder of the punching tool, in particular an angle information (401) of an eccentric of an eccentric press (400a, 400b, 400c); or
wherein the second data (102) comprises a path information (402) of an encoder of the punching tool, in particular a path information of a piston of a hydraulic press.

8. Device (100) according to any one of the preceding claims,
wherein the prediction model (110) predicts the wear state (103) of the punching tool (430) on the basis of state variables of the punching process, wherein the state variables comprise the following:
Vibrations and elastic bending (201) acting on the punching tool (430) during the movement of the punching tool (430) from the initial position (410) to the end position (420);
the angle (202, 401) or the path (402) covered by the punching tool when moving from the initial position to the end position,
a temperature of the punching tool.

9. Device (100) according to any one of the preceding claims,
wherein the prediction model (110) is configured to determine an anomaly (512, 523) in the stamping process based on a distance of a state variable determined from the first data (101) and the second data (102) to one or more reference values, and to detect (513, 524) an anomaly (512, 523) when the determined distance exceeds a predetermined threshold value.

10. Device (100) according to claim 9,
wherein the device (100) is designed to save (531) a detected anomaly and, based on an error classification (540), to assign the anomaly to an error type.

11. Device (100) according to claim 10,
wherein the error classification (540) is performed based on a previously performed manual assignment (533) of previously occurring anomalies to error types and, in the case of newly occurring anomalies, an automatic extension of the error classification (534) is performed based on an assignment of the newly occurring anomalies to new error types.

12. Device (100) according to any of the preceding claims,
wherein the device (100) is configured to determine the time for maintenance (104) of the punching tool based on a regression model (514) which predicts a remaining lifetime of the punching tool (430) depending on the wear state (103) of the punching tool (430).

13. Device (100) according to claim 12,
wherein the regression model (514) is configured to map a nonlinear wear pattern of the punching tool (430) to a linear remaining lifetime of the punching tool.

14. Device (100) according to claim 12 or 13,
wherein the device (100) is configured to train (525) the regression model (514) in a training state (520) of the punching process with a predetermined training data set, and to test in a test state of the punching process with a test data set comprising the first data (101) and the second data (102).

15. Device (100) according to any one of the preceding claims,
wherein the device (100) is adapted to determine the time for maintenance (104) of the punching tool (430) depending on remaining periods of the punching tool from the initial position (410) to the end position (420).

16. Method (600) for monitoring a stamping process in which a stamping tool (430) for stamping a material is periodically moved from an initial position (410) to an end position (420), the method comprising the steps of:
Obtaining (601) first data (101) indicating a force exerted on the material by the punching tool as the punching tool moves from the initial position to the end position;
Obtaining (602) second data (102) indicating an angle or a distance travelled by the punching tool while moving from the initial position to the end position; **characterized in that**
the method further comprises the steps of
Determining (603) a time for maintenance of the punching tool (430) based on a prediction model (110) that predicts a wear state (103) of the punching tool based on the first data (101) and the second (102) data;
wherein the prediction model (110) predicts the wear state (103) of the punching tool based on a compensation of a thermal influence (300) by a heating of the punching tool (430) in the course of the punching process.

## Revendications

1. Dispositif (100) de surveillance d'un processus de poinçonnage, dans lequel un outil de poinçonnage (430, 300) destiné à poinçonner un matériau est déplacé périodiquement d'une position initiale (410) à une position finale (420), le dispositif (100) étant conçu pour,
d'obtenir des premières données (101) indiquant une force exercée sur le matériau lors du déplacement de l'outil de poinçonnage de la position initiale à la position finale par l'outil de poinçonnage ;
d'obtenir des deuxièmes données (102) indiquant un angle ou une distance parcourue par l'outil de poinçonnage lors du déplacement de la position initiale à la position finale ; **caractérisé en ce que**
le dispositif est en outre conçu pour
déterminer un moment de maintenance (104) de l'outil de poinçonnage sur la base d'un modèle de prédiction (110) qui prédit un état d'usure (103) de l'outil de poinçonnage sur la base des premières données (101) et des deuxièmes données (102) ;
le modèle prédictif (110) étant conçu pour prédire l'état d'usure (103) de l'outil de poinçonnage sur la base d'une compensation d'une influence thermique (300) par un échauffement de l'outil de poinçonnage (430) au cours du processus de poinçonnage.

2. Dispositif (100) selon la revendication 1,
dans lequel les premières données indiquent la force au moyen d'une flexion ou d'une déformation de l'outil de poinçonnage qui agit sur l'outil de poinçonnage (430) en raison du processus de poinçonnage.

3. Dispositif (100) selon la revendication 1 ou 2,
dans lequel le dispositif (100) est conçu pour déterminer le moment de maintenance (104) de l'outil de poinçonnage (430) sur la base des premières et deuxièmes données et d'au moins une valeur seuil prédéterminée.

4. Dispositif (100) selon la revendication 3,
dans lequel le dispositif est en outre adapté pour obtenir des troisièmes données indicatives d'une température de l'outil de poinçonnage, le modèle prédictif prédisant l'état d'usure de l'outil de poinçonnage à partir des troisièmes données en combinaison avec les premières données (101) et les deuxièmes données (102).

5. Dispositif (100) selon la revendication 4,
le modèle de prédiction (110) étant conçu pour reproduire dans la prédiction une compensation de l'influence thermique (300) par échauffement de l'outil de poinçonnage (430) au cours du processus de poinçonnage.

6. Dispositif (100) selon l'une des revendications précédentes,
dans lequel les premières données (101) sont des données de capteur provenant de capteurs piézoélectriques placés dans l'outil de poinçonnage.

7. Dispositif (100) selon l'une des revendications précédentes,
dans lequel les deuxièmes données (102) comprennent une information angulaire (202, 401) d'un capteur de rotation de l'outil de poinçonnage, en particulier une information angulaire (401) d'un excentrique d'une presse à excentrique (400a, 400b, 400c) ; ou
les deuxièmes données (102) comprenant une information de course (402) d'un capteur de course de l'outil de poinçonnage, en particulier une information de course d'un piston d'une presse hydraulique.

8. Dispositif (100) selon l'une quelconque des revendications précédentes,
dans lequel le modèle prédictif (110) prédit l'état d'usure (103) de l'outil de poinçonnage (430) à l'aide de grandeurs d'état du processus de poinçonnage, les grandeurs d'état comprenant ce qui suit :
les vibrations et les déformations élastiques (201) qui agissent sur l'outil de poinçonnage (430) lors du déplacement de l'outil de poinçonnage (430) de la position initiale (410) à la position finale (420) ;
l'angle (202, 401) ou la distance (402) parcourue par l'outil de poinçonnage lors de son déplacement de la position initiale à la position finale,
une température de l'outil de poinçonnage.

9. Dispositif (100) selon l'une des revendications précédentes,
dans lequel le modèle de prédiction (110) est conçu pour déterminer une anomalie (512, 523) dans le processus de poinçonnage sur la base d'une distance entre une grandeur d'état déterminée à l'aide des premières données (101) et des deuxièmes données (102) et une ou plusieurs valeurs de référence, et pour détecter (513, 524) une anomalie (512, 523) lorsque la distance déterminée dépasse une valeur limite prédéterminée.

10. Dispositif (100) selon la revendication 9,
dans lequel le dispositif (100) est conçu pour mémoriser (531) une anomalie détectée et, sur la base d'une classification d'erreurs (540), pour attribuer l'anomalie à un type d'erreur.

11. Dispositif (100) selon la revendication 10,
la classification des erreurs (540) s'effectuant sur la base d'une affectation manuelle (533) effectuée auparavant d'anomalies apparues jusqu'à présent à des types d'erreurs et, en cas d'anomalies nouvellement apparues, une extension automatique de la classification des erreurs (534) s'effectuant sur la base d'une affectation des anomalies nouvellement apparues à de nouveaux types d'erreurs.

12. Dispositif (100) selon l'une des revendications précédentes,
dans lequel le dispositif (100) est adapté pour déterminer le moment de maintenance (104) de l'outil de poinçonnage sur la base d'un modèle de régression (514) qui prédit une durée de vie restante de l'outil de poinçonnage (430) en fonction de l'état d'usure (103) de l'outil de poinçonnage (430).

13. Dispositif (100) selon la revendication 12,
le modèle de régression (514) étant conçu pour reproduire une évolution non linéaire de l'usure de l'outil de poinçonnage (430) sur une durée de vie résiduelle linéaire de l'outil de poinçonnage.

14. Dispositif (100) selon la revendication 12 ou 13,
le dispositif (100) étant conçu pour entraîner (525) le modèle de régression (514) dans un état d'entraînement (520) du processus de poinçonnage avec un jeu de données d'entraînement prédéfini, et pour le tester dans un état de test du processus de poinçonnage avec un jeu de données de test qui comprend les premières données (101) et les secondes données (102).

15. Dispositif (100) selon l'une des revendications précédentes,
dans lequel le dispositif (100) est conçu pour déterminer le moment de maintenance (104) de l'outil de poinçonnage (430) en fonction des périodes restantes de l'outil de poinçonnage de la position initiale (410) à la position finale (420).

16. Procédé (600) de surveillance d'un processus de poinçonnage dans lequel un outil de poinçonnage (430) est déplacé périodiquement d'une position initiale (410) à une position finale (420) pour poinçonner un matériau, le procédé comprenant les étapes suivantes :
Obtention (601) de premières données (101) indiquant une force exercée sur le matériau lors du déplacement de l'outil de poinçonnage de la position initiale à la position finale par l'outil de poinçonnage ;
l'obtention (602) de deuxièmes données (102) indiquant un angle ou une distance parcourue par l'outil de poinçonnage lorsqu'il se déplace de la position initiale à la position finale ; **caractérisé en ce que**
le procédé comprend en outre les étapes suivantes
déterminer (603) un moment de maintenance de l'outil de poinçonnage (430) sur la base d'un modèle de prédiction (110) qui prédit un état d'usure (103) de l'outil de poinçonnage à partir des premières données (101) et des secondes données (102) ;
dans lequel le modèle de prédiction (110) prédit l'état d'usure (103) de l'outil de poinçonnage sur la base d'une compensation d'une influence thermique (300) par un échauffement de l'outil de poinçonnage (430) au cours du processus de poinçonnage.
